# EUROPÄISCHE PATENTANMELDUNG

(11) **EP 2 698 700 A2**
(43) Veröffentlichungstag der Anmeldung: **19.02.2014**
(21) Anmeldenummer: 13168217.1
(22) Anmeldetag: 17.05.2013
(51) Int. Cl.: G06F 3/0488, A01D 41/00, G06F 3/0484

(54) **Anzeigenvorrichtung für Landmaschinen**

(30) Priorität: 17.08.2012 DE 102012107551
(71) Anmelder: CLAAS Selbstfahrende Erntemaschinen GmbH, 33428 Harsewinkel (DE)
(72) Erfinder: Grevinga, Markus, 48369 Saerbeck (DE); Losch, Michael, 33775 Versmold (DE)

(57) **Zusammenfassung**

Die Erfindung betrifft eine elektronische Bedien- und Anzeigeeinheit (8) mit einem Display (18) und wenigstens einer Bedieneinheit (22, 23), wobei das Display (18) eine Vielzahl von Visualisierungsbereichen (32, 33, 37, 38, 46, 47) umfasst und einem oder mehreren der Visualisierungsbereiche (32, 33, 37, 38, 46, 47) die Einstellung von Parametern (64) repräsentierende Ikons (57) zugeordnet sind, wobei das jeweilige Ikon (57) einen Parameter (64) einer Arbeitsmaschine (1) repräsentiert und durch Aktivierung des Ikons (57) zumindest ein virtuelles Einstellelement (65) am Display (18) angezeigt wird und das virtuelle Einstellelement (65) zur Änderung des Parameters (64) der Arbeitsmaschine (1) editierbar ist.

## Beschreibung

Die Erfindung betrifft eine elektronische Bedien- und Anzeigeeinheit mit einem Display und wenigstens einer Bedieneinheit nach dem Oberbegriff des Anspruchs 1.

Aus dem Stand der Technik sind eine Vielzahl von gattungsgemäßen Anzeigeeinrichtungen bekannt geworden, die zur Visualisierung und Editierung von Prozessen, etwa auf mobilen landwirtschaftlichen Arbeitsmaschinen eingesetzt werden. So ist beispielsweise aus der DE 102 03 370 ein Verfahren zur Steuerung einer Bedienoberfläche bekannt, bei der eine interaktive Bedienoberfläche eine Visualisierung einer Vielzahl von Bedienfenstern ermöglicht. Neben der an sich bekannten überlappenden Darstellung von Anzeigefenstern wird dort vorgeschlagen, dass bei Aktivierung eines weiteren Anzeigefensters das bereits aktivierte Anzeigefenster so verkleinert wird, dass der Inhalt aller aktiven Anzeigefenster sichtbar ist. Derartige Systeme haben vor allem den Nachteil, dass eine Vielzahl von Informationen unmittelbar am Bildschirm auch dann visualisiert sind, wenn deren momentane Überwachung oder Editierung nicht erforderlich ist. Diese Vielzahl von Informationen kann beim Bediener der Maschine auch zu einer Art Reizüberflutung führen, da stets eine erhebliche Anzahl von Informationen zugänglich ist und der Bediener selbst eine Priorisierung vornehmen und berücksichtigen muss, um die wichtigen von den weniger wichtigen Informationen zu unterscheiden. Zudem fällt die Orientierung auf einem derart strukturierten Display schwer, da sich die Bildschirmstruktur ständig ändert.

Aus der EP 1 650 715 ist ein Anzeigeverfahren bekannt geworden, bei dem hinzutretende neue, für den jeweiligen Prozess notwendige Informationen in einem Randbereich eines Displays visualisiert werden, während maschinenübergreifende zuvor alleine auf dem Monitor visualisierte Informationen in der Weise gezoomt werden, dass sie weiterhin ablesbar sind, die neuen Information aber in einem gut zugänglichen und damit leichter editierbaren äußeren Bereich des Displays positioniert sind. Obgleich eine so strukturierte Visualisierungseinrichtung eine bessere Orientierung auf dem Bildschirm sicherstellt, haben auch derartige Systeme den Nachteil, dass die Vielzahl der visualisierten Informationen mitunter für den laufenden Prozess nicht erforderlich sind und damit zu einer unnötigen Reizüberflutung des die jeweilige landwirtschaftliche Arbeitsmaschine bedienenden Fahrers führen können.

Es ist deshalb Aufgabe der Erfindung, die beschriebenen Nachteile des Standes der Technik zu vermeiden und insbesondere eine Visualisierungseinrichtung vorzuschlagen, die jeweils nur kontextrelevante Parameter visualisiert und eine Änderung von Fahrzeugparametern auf einfache Weise möglich wird.

Diese Aufgabe wird erfindungsgemäß durch die kennzeichnenden Merkmale des Anspruchs 1 gelöst.

Indem die elektronische Bedien- und Anzeigeeinheit mit zumindest einem Display und wenigstens einer Bedieneinheit ausgerüstet ist und dem Display in einem oder mehreren Visualisierungsbereichen die Einstellung von Parametern repräsentierende lkons zugeordnet sind bei deren Aktivierung zumindest ein virtuelles Einstellelement am Display angezeigt wird, welches zur Änderung des Parameters der Arbeitsmaschine editierbar ist, ist sichergestellt, dass eine Änderung von Fahrzeugparametern auf einfache Weise möglich wird

Eine einfache Bedienbarkeit der virtuellen Einstellelemente wird dann erreicht, wenn die Einstellelemente in einer vorteilhaften Ausgestaltung der Erfindung als virtueller Drehschalter und/oder virtueller Schiebeschalter ausgeführt sind.

In einer vorteilhaften Weiterbildung der Erfindung wird die Editierbarkeit des virtuellen Drehschalters durch kreisförmiges Ziehen eines Markers und die Editierbarkeit des virtuellen Schiebeschalters durch lineares Ziehen eines Markers bewirkt, wobei die Aktivierung des jeweiligen Markes mittels der Touchscreen-Funktion eines als Touchscreen-Monitor ausgeführten Displays oder durch dem Display zugeordnete Bedienelemente, vorzugsweise Dreh-Drück-Schalter erfolgt. Auf diese Weise wird eine flexible Handhabung der Parametereinstellung erreicht, da sowohl die Touchscreen-Funktion eines Monitors als auch vorhandene Stellschalter zur Änderung des jeweiligen Parameters genutzt werden können. Während die Benutzung von Schaltern insbesondere den Vorteil hat, dass erschütterungsbedingte Störungen der Feinmotorik bei der Bedienung eher keine Rolle spielen, hat das Nutzen einer Touchscreen-Funktion insbesondere den Vorteil, dass die Änderung eines Parameters schneller bewirkt werden kann.

Eine Vereinfachung der Aktivierung der virtuellen Einstellelemente ergibt sich in einer vorteilhaften Ausgestaltung der Erfindung dann, wenn dem virtuellen Schiebeschalter oder dem virtuellen Drehschalter Editierbutton auf dem Display zur Editierung des jeweiligen Parameters zugeordnet sind, wobei deren Editierung durch Berührung der Editierbutton auf einem als Touchscreen-Monitor ausgeführten Display oder durch dem Display zugeordnete Bedienelemente, vorzugsweise Dreh-Drück-Schalter erfolgt.

Eine sehr gut an die jeweiligen Bedingungen anpassbare Bedienung der erfindungsgemäßen Bedien- und Anzeigeneinheit ergibt sich in einer vorteilhaften Ausgestaltung dann, wenn einem oder mehreren der Visualisierungsbereiche des Displays ein denselben Parameter visualisierender virtueller Schiebeschalter, ein virtueller Drehschalter und Editierbutton zugeordnet sind, wobei der Parameter durch Aktivierung eines dieser virtuellen Einstellelemente änderbar ist und die Änderung eines dieser Einstellelemente zugleich eine Änderung zumindest eines weiteren Einstellelementes bewirkt.

Die erfindungsgemäße Bedien- und Anzeigeeinheit kann dann hochflexibel und effizient zur Optimierung von Einsatzbedingungen einer landwirtschaftlichen Arbeitsmaschine eingesetzt werden, wenn die mittels der Bedien- und Anzeigeeinheit editierbaren Parameter Maschinenparameter, Qualitätsparameter der landwirtschaftlichen Arbeitsmaschine, Qualitätsparameter des Erntegutes und Erntegutparameter sind.

Der virtuelle Drehschalter hat in einer vorteilhaften Ausgestaltung der Erfindung für den Bediener dann einen hohen Informationsgehalt und eine gute Übersichtlichkeit, wenn der verfügbare Wertebereich des Parameters in dem virtuellen Drehschalter in einem ringförmigen Bereich visualisiert ist und der Marker in diesem ringförmigen Bereich bewegt wird. In diesem Zusammenhang erhält der Bediener auch eine Information darüber, ob der Parameter in einem zulässigen Bereich ist oder nicht, wenn in einer vorteilhaften Weiterbildung der ringförmige Bereich Abschnitte unterschiedlicher Färbung umfasst und die Färbung des jeweiligen Abschnitts ein Maß für die Güte des visualisierten Parameters ist.

Indem einem oder mehreren der Visualisierungsbereiche des Displays Pop-up Fenster zugeordnet sind und jedes Pop-up Fenster ein oder mehrere jeweils einen Parameter repräsentierende lkons umfasst, wobei ein oder mehrere der Ikons mittels der Editierelemente änderbar sind, wird in einer vorteilhaften Ausgestaltung sichergestellt, dass Parametereinstellungen in den unterschiedlichsten Arbeitsphasen der landwirtschaftlichen Arbeitsmaschine möglich sind.

In Abhängigkeit von der Komplexität eines gewählten Werkzeugs kann ein Editieren von Parametern in mehreren Stufen zweckmäßig sein, wobei hier neben generellen Einstellungen auch ganz spezielle Parametereinstellungen ein Rolle spielen können, sodass in einer weiteren vorteilhaften Ausgestaltung der Erfindung vorgesehen ist, dass eine Vielzahl weiterer Pop-up Fenster aktivierbar sind, wobei jedes der nachfolgend aktivierten Pop-up Fenster über dem zuvor aktivierten Pop-up Fenster durch horizontales Einschieben in den Visualisierungsbereich des Displays positioniert wird.

Indem in einer weiteren vorteilhaften Ausgestaltung der Erfindung die elektronische Bedien- und Anzeigeeinheit zumindest ein Display mit einer Vielzahl von Visualisierungsbereichen umfasst und in Navigationsebenen betreibbar ist, wobei das Display innerhalb einer Navigationsebene in Visualisierungsbereiche unterteilt ist und zumindest ein Teil der Visualisierungsbereiche relativ zueinander bewegbar sind wird sichergestellt, dass jeweils nur kontextrelevante Parameter visualisiert werden und die Visualisierung nach wiederkehrendem Muster zur schnellen Orientierung des Bedieners in den Navigationsebenen führt. Umfasst dabei die Bewegbarkeit der Visualisierungsbereiche relativ zueinander ein horizontales und/oder vertikales Scrollen des jeweiligen Visualisierungsbereiches, ist der Bediener zudem mit einer effizienten, weit verbreiteten Navigationsstruktur konfrontiert, die einfach beherrschbar ist und schnell zu dem auf dem Display auszuwählenden Parameter führt.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
- Figur 1: eine als Mähdrescher ausgeführte landwirtschaftliche Arbeitsmaschine, die erfindungsgemäße Bedien- und Anzeigeeinheit umfassend
- Figur 2: eine schematische Darstellung der erfindungsgemäßen Bedien- und Anzeigeeinheit in verschiedenen Navigationsebenen
- Figur 3: das Navigieren in einer ersten Navigationsebene
- Figur 4: das Ändern der Displaystruktur in einer Navigationsebene
- Figur 5: das Ändern von Parametern in einer Navigationsebene

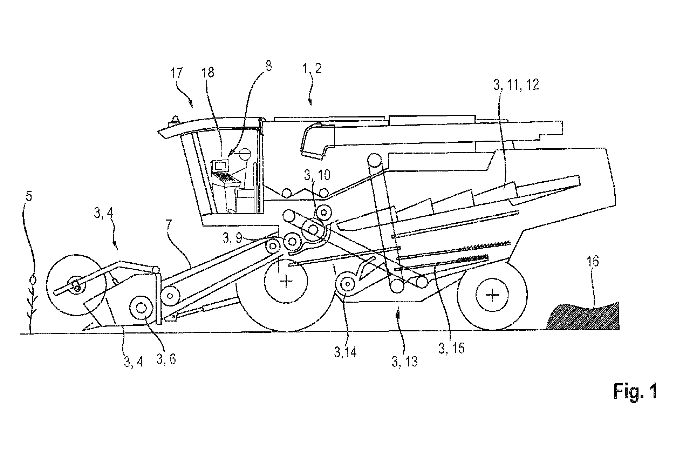

Figur 1 zeigt eine beispielhaft als Mähdrescher 2 ausgeführte landwirtschaftliche Arbeitsmaschine 1 und deren Arbeitsaggregate 3. In seinem frontseitigen Bereich nimmt der Mähdrescher 2 ein Schneidwerk 4 auf, welches das Erntegut 5 annimmt, schneidet und mittels eines Förderorgans 6 an den nachgeordneten Schrägförderer 7 übergibt. Über den Schrägförderer 7 wird das Erntegut 5 in an sich bekannter Weise an die Dreschorgane, die vorliegend aus einer ersten Dreschtrommel 9 und einer dieser nachgeordneten zweiten Dreschtrommel 10 bestehen, übergeben.

Zur weiteren Abscheidung der Körner wird der Gutstrom an eine Trenneinrichtung 11, wie beispielsweise einen Hordenschüttler 12, sowie an eine Reinigungseinrichtung 13, die im wesentlichen aus einem Gebläse 14 und Reinigungssieben 15 besteht, gefördert, bevor das Stroh aus dem rückwärtigen Bereich des Mähdreschers 2 heraus gefördert und beispielsweise auf dem Feldboden in einem Schwad 16 abgelegt oder breitverteilt wird. Über eine in der Kabine 17 angeordnete im folgenden näher zu beschreibende erfindungsgemäße elektronische Bedien- und Anzeigeeinheit 8 kann der Fahrer des Mähdreschers 2 in an sich bekannter Weise Einstellungen der unterschiedlichen Arbeitsaggregate 3 vornehmen und auf diese Weise die Erntefahrt den spezifischen Erntegutbedingungen anpassen. Darüber hinaus hat der Fahrer des Mähdreschers 2 stets einen Überblick über die auf dem Display 18 der in der Kabine 17 angeordneten Bedien- und Anzeigeeinheit 8 visualisierten Maschinen- und/oder Erntegutdaten. In Bezug auf die hier dargestellte, als Mähdrescher 2 ausgeführte landwirtschaftliche Arbeitsmaschine 1 liegt es im Rahmen der Erfindung, dass die landwirtschaftliche Arbeitsmaschine 1 auch als beliebige landwirtschaftliche Arbeitsmaschine, etwa als Feldhäcksler oder Traktor ausgeführt sein kann.

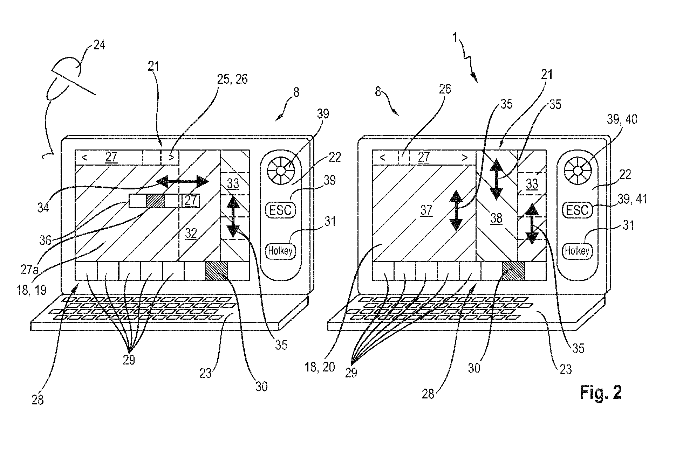

Figur 2 zeigt eine schematische Darstellung der erfindungsgemäßen Bedien- und Anzeigeeinheit 8, wobei die linke Darstellung die noch näher zu beschreibende erste Navigationsebene 19 und die rechte Darstellung die ebenfalls noch näher zu beschreibende zweite Navigationsebene 20 des der Bedien- und Anzeigeeinheit 8 zugeordneten Displays 18 darstellt. Die Bedien- und Anzeigeeinheit 8 umfasst neben dem als Touchscreen-Monitor 21 ausgeführten Display 18 eine erste Bedieneinheit 22, die ein Navigieren innerhalb einer Menüebene 19, 20 ermöglicht sowie zumindest eine weitere Bedieneinheit 23 mittels derer Eingaben durch den Bediener 24 vorgenommen werden können. Es liegt im Rahmen der Erfindung, dass die ersten und zweiten Bedieneinheiten 22, 23 in nicht dargestellter Weise in einer einzigen Bedieneinheit zusammengefasst sein können. Das als Touchscreen-Monitor 21 ausgeführte Display 18 verfügt in seinem obenseitigen Bereich über einen als sogenannte Header-Menüleiste 25 ausgeführten Anzeigebereich 26, der permanent zumindest in der ersten Navigationsebenen 19 sichtbar ist. Die Header-Menüleiste 25 umfasst die noch näher zu beschreibenden Arbeitsphasen 27 der landwirtschaftlichen Arbeitsmaschine 1, wobei jede der Arbeitsphasen 27 durch horizontales Scrollen der Header-Menüleiste 25 vom Betreiber 24 der landwirtschaftlichen Arbeitsmaschine 1 via Touchscreen-Funktion durch horizontales Ziehen der Header-Menüleiste 25 auswählbar ist.

Am untenseitigen Rand des Displays 18 ist diesem ein weiterer, in allen verfügbaren Navigationsebenen 19, 20 sichtbarer Anzeigebereich 28 zugeordnet, der einen Anzeigebereich "Favoriten" 29 sowie einen Anzeigebereich "Hotkey" 30 umfasst, wobei in noch näher zu beschreibender Weise im Anzeigebereich "Favoriten" 29 dauerhaft systemrelevante Informationen visualisiert werden und im Anzeigenbereich "Hotkey" 30 navigationsebenenrelevante Informationen durch Aktivierung des jeweiligen Anzeigenbereichs 29 visualisierbar sind. Die in dem Button "Hotkey" 30 hinterlegten navigationsebenenrelevanten Informationen können entweder durch Berühren dieses Buttons auf dem als Touchscreen-Monitor 21 ausgeführten Display 18 oder durch Drücken der in der ersten Bedieneinheit 22 angeordneten Taste "Hotkey" 31 aktiviert werden.

Das erfindungsgemäß in Navigationsebenen 19, 20 betreibbare Display 18 umfasst in einer ersten Navigationsebene 19 zumindest einen Visualisierungsbereich "Arbeitsphase" 32 sowie einen Visualisierungsbereich "Tool-Menü" 33, wobei der Bediener 24 der landwirtschaftlichen Arbeitsmaschine 1 durch horizontales Scrollen 34 im Visualisierungsbereich "Arbeitsphase" 32 und vertikales Scrollen 35 im Visualisierungsbereich "Tool-Menü" 33 in dem jeweiligen Visualisierungsbereich 32, 33 navigieren kann. Da das Display 18 als Touchscreen-Monitor 21 ausgeführt ist wird das horizontale und vertikale Scrollen 34, 35 durch Berührung des Display 18 und das Ziehen des jeweiligen Visualisierungsbereichs 32, 33 in der gewünschten Richtung bewirkt. Damit der Bediener 24 während des Scrollens im Visualisierungsbereich "Arbeitsphase" 32 über die jeweils gerade aktivierte Arbeitsphase 32 informiert ist, wird ein weiteres Anzeigefeld 36 am Display 18 eingeblendet, welches alle wählbaren Arbeitsphasen 27 anzeigt, wobei die jeweils aktivierte Arbeitsphase 27a hervorgehoben visualisiert wird.

In der erfindungsgemäßen weiteren Navigationsebene 20 umfasst das Display 18 zumindest einen Visualisierungsbereich "Tool Content" 37, den Visualisierungsbereich "Tool-Menü" 33 sowie einen Visualisierungsbereich "Tool-Submenü" 38, wobei in jedem dieser Visualisierungsbereiche 33, 37, 38 durch vertikales Scrollen 35 navigiert werden kann. In analoger Weise zur ersten Navigationsebene 19 wird das vertikale Scrollen 35 durch Berührung des Displays 18 und das Ziehen des jeweiligen Visualisierungsbereichs 33, 37, 38 in die gewünschte Richtung bewirkt. Darüber hinaus ist in der zweiten Navigationsebene 20 das Navigieren zwischen den Visualisierungsbereichen 33, 37,38 und innerhalb jedes Visualisierungsbereichs 33, 37, 38 mittels der ersten Bedieneinheit 22 zugeordneten Bedienelementen 39 möglich. Im dargestellten Ausführungsbeispiel verfügt die erste Bedieneinheit 22 über ein als Dreh-Druck-Schalter 40 ausgeführtes Bedienelement 39 bei dessen Drehung zwischen den Visualisierungsbereichen 33, 37, 38 hin und her geschaltet und innerhalb eines Visualisierungsbereiches 33, 37,38 navigiert werden kann, wobei die Drücken-Funktion des Dreh-Druck-Schalters 40 jeweils zur Bestätigung oder Auswahl einer gewählten Funktion dient. Mittels des als Escape-Taste 41 ausgeführten weiteren Bedienelementes 39 kann eine mit dem Dreh-Druck-Schalter 40 vorgenommene Editierung zurückgesetzt werden.

Indem das Display 18 in den beschriebenen ersten und zweiten Navigationsebenen 19, 20 betreibbar ist, wobei das Display 18 innerhalb einer Navigationsebene 19, 20 in Visualisierungsbereiche 32, 33, 37, 38 unterteilt ist und zumindest ein Teil der Visualisierungsbereiche 32, 33, 37, 38 relativ zueinander bewegbar sind, wird eine Navigationsmöglichkeit geschaffen, die dem Bediener 24 der landwirtschaftlichen Arbeitsmaschine 1 ein schnelles und zudem übersichtliches Ändern von Maschinenparametern ermöglicht. Die Orientierung innerhalb der verfügbaren Navigationsebenen 19, 20 wird auch dadurch noch erhöht, dass nur in einer ersten Navigationsebene 19 ein horizontales Scrollen 34 möglich ist während in der zumindest einen weiteren Navigationsebene 20 ausschließlich ein vertikales Scrollen 35 realisierbar ist. Dies hat vor allem den Effekt, dass der Bediener 24 der landwirtschaftlichen Arbeitsmaschine bereits an der Bewegung der Visualisierungsbereiche 32, 33, 37, 38 erkennt, in welcher Navigationsebene 19, 20 gerade navigiert wird.

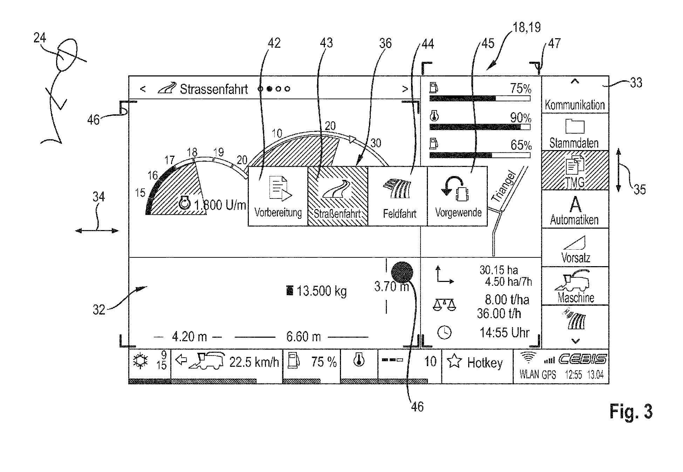

Figur 3 zeigt eine Detailansicht des Displays 18 in der ersten Navigationsebene 19. Das die verfügbaren Arbeitsphasen visualisierende Anzeigefeld 36 umfasst die Arbeitsphasen "Vorbereitung" 42, "Straßenfahrt" 43, "Feldfahrt" 44 und "Vorgewende" 45. Der Visualisierungsbereich jeder Arbeitsphase 42-45 ist so strukturiert, dass er einen Visualisierungsbereich "Arbeitsphasen-Content" 46 und zumindest einen Visualisierungsbereich "Tool-View" 47 umfasst. In der ersten Navigationsebene 19 kann der Bediener 24 durch Berührung 48 des Displays 18 mit dem Finger oder einem geeigneten Gegenstand die gewünschte Arbeitsphase 42-45 wählen indem er entweder den Visualisierungsbereich "Arbeitsphase" 32 in horizontaler Richtung 34 scrollt oder die gewünschten Arbeitsphasen 42-45 unmittelbar in dem zusätzlichen Anzeigefeld 36 antippt. Unabhängig davon, kann der Bediener 24 in der ersten Navigationsebene 19 in dem Visualisierungsbereich "Tool-Menü" 33 in noch näher zu beschreibender Weise durch vertikales Scrollen 35 in diesem Navigieren.

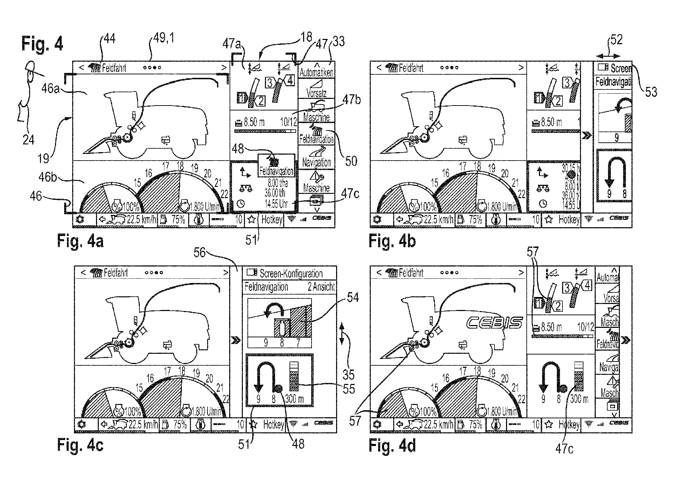

Figur 4 zeigt am Beispiel einer als selbstfahrender Feldhäcksler 49 ausgeführten landwirtschaftlichen Arbeitsmaschine 1 das Ändern der Struktur des Displays 18 in der ersten Navigationsebene 19. Obgleich die Änderung der Displaystruktur nachfolgend anhand der ersten Navigationsebene 19 beschrieben wird liegt es im Rahmen der Erfindung, dass die zu beschreibende Prozedur in analoger Weise auch zur Änderung der Displaystruktur in der zweiten Navigationsebene 20 anwendbar ist, sodass aus Vereinfachungsgründen auf eine Beschreibung dieser Prozedur verzichtet wird. Im dargestellten Ausführungsbeispiel wurde vom Bediener 24 des Feldhäckslers 49 die Arbeitsphase "Feldfahrt" 44 ausgewählt. Jeder der Visualisierungsbereiche "Arbeitsphasen-Content" 46 und "Tool-View" 47 sind in Teilbereiche 46a-b, 47 a-c untergliedert, wobei die in den Teilbereichen 46a-b, 47a-c visualisierten Informationen teilbereichsweise austauschbar sind. Die Editierung erfolgt in der Weise, dass der Bediener 24 zunächst durch Berührung 48 aus dem Visualisierungsbereich "Tool-Menü" 33 ein Werkzeug 50, hier das Werkzeug "Feldnavigation", auswählt und in einen der Teilbereiche 46a-b, 47a-c der Visualisierungsbereiche "Arbeitsphasen-Content" 46 oder "Tool-View" 47 zieht.

Im dargestellt Ausführungsbeispiel wird das Werkzeug "Feldnavigation" 50 in den untersten Teilbereich 47c des Visualisierungsbereichs "Tool-View" 47 gezogen, wobei die Aktivierung des Teilbereichs 47c durch einen farblich hervorgehobenen Rand 51 signalisiert wird. Unterbricht der Bediener 24 in diesem Teilbereich 47c die Berührung öffnet sich ein von rechts nach links in horizontaler Richtung 52 in das Display eingeschobenes Pop-up Fenster 53, welches im vorliegenden Fall zwei alternative Editieroptionen 54, 55 für das Werkzeug "Feldnavigation" 50 umfasst. Indem der Bediener 24 durch Berührung 48 eine der alternativen Editieroptionen 54, 55 aus dem den Visualisierungsbereich "Tool-View" 47 vollständig überdeckenden Pop-up Fenster 53 wählt, wird diese Editieroption 55 zunächst zum Zeichen ihrer Auswahl optisch hervorgehoben, im einfachsten Fall wieder durch farbliche Hervorhebung des Randes 51. Aktiviert der Bediener 24 sodann eine in dem Pop-up Fenster 53 positionierte Schließen-Leiste 56 wird das Pop-up Fenster 53 durch horizontales Herausbewegen 52 aus dem Display 18 wieder geschlossen und zugleich hat die gewählte Editieroption 55 den zuvor ausgewählten untersten Teilbereich 47c des Visualisierungsbereichs "Tool-View" 47 ausgefüllt. Es liegt im Rahmen der Erfindung, dass sich die wählbaren Editieroptionen 54, 55 nicht auf visuelle Aspekte beschränken sondern auch verschiedene Funktionen umfassen können. Zugleich können mehr als die 2 beschriebenen Editieroptionen 54, 55 verfügbar sein, wobei dann ein Navigieren zwischen den wählbaren Editieroptionen 54, 55 durch vertikales Scrollen 35 in dem geöffneten Pop-up Fenster 53 möglich wird.

Ein Wechsel von der ersten Navigationsebene 19 in die weitere Navigationsebene 20 wird nach Auswahl einer gewünschten Arbeitsphase dadurch bewirkt, dass der Bediener 24 einen der Visualisierungsbereiche "Arbeitsphasen-Content" 46 oder "Tool-View" 38 berührt. Findet die Berührung 48 im Bereich eines der auf dem Display 18 visualisierten lkons 57 statt, öffnet sich wie nachfolgend näher beschrieben unmittelbar die mit dem berührten Ikon 57 verknüpfte Funktion oder Anwendung. Wird ein Bereich zwischen den lkons 57 berührt, findet nur der Wechsel zwischen den Navigationsebenen 19, 20 statt, ohne dass dies unmittelbar zu einer Änderung der Displaystruktur führt.

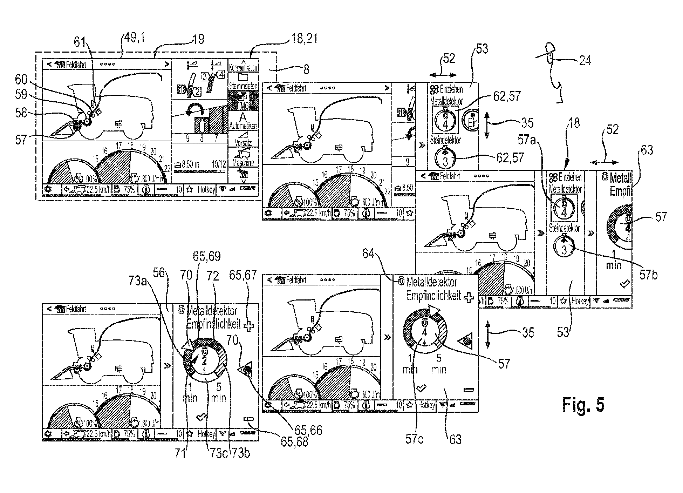

Figur 5 beschreibt beispielhaft eine weitere Variante des Navigierens in der ersten Menüebene 19, wobei hier wieder von einer als Feldhäcksler 49 ausgeführten landwirtschaftlichen Arbeitsmaschine 1 ausgegangen wird. In an sich bekannter Weise verfügt ein Feldhäcksler 49 über Einzugsorgane 58, ein Häckselaggregat 59, einer diesem nachgeordneten Nachzerkleinerungseinrichtung 60 sowie einem Nachbeschleuniger 61 zum Austragen des gehäckselten Gutes aus dem Feldhäcksler 49. Zur Beschreibung der erfindungsgemäßen Parameteränderung wird hier beispielhaft die Empfindlichkeitseinstellung eines sogenannten Metalldetektors im Bereich der Einzugsorgane 58 des Feldhäckslers 49 herangezogen.

Zunächst berührt der Bediener 24 das als Touchscreen-Monitor 21 ausgeführte Display 18 im Bereich des die Einzugsorgane 58 repräsentierenden lkons 57. Durch die Berührung wird wieder ein, nunmehr andere Inhalte umfassendes Pop-up Fenster 53 in der Weise aktiviert, dass sich das Pop-up Fenster 53 wieder in horizontaler Richtung 52 in das Display 18 bewegt, wobei das Pop-up Fenster 53 die verfügbare Anzeigefläche des Displays 18 zumindest teilweise überdeckt. In Analogie zu der zuvor beschriebenen Änderung der Displaystruktur sind in dem Pop-up Fenster 53 eine Vielzahl von Editieroptionen 62, hier beispielsweise die Editierung eines Metalldetektors und die Editierung eines Steindetektors, verfügbar. Der Bediener 24 wählt nun die gewünschte Editieroption 62, hier Änderung von Parametern des Metalldetektors, durch Berührung des die Editieroption 62 repräsentierenden lkons 57 aus, wobei das gewählte Ikon 57 wieder durch Farbumschlag seine Aktivierung signalisiert. Sodann öffnet sich selbsttätig ein weiteres Pop-up Fenster 63 in der Weise, dass es wiederum in horizontaler Richtung 52 in das Display 18 bewegt wird und in seiner editierfähigen Position schließlich das zuvor geöffnete Pop-up Fenster 53 vollständig überdeckt. Im dargestellten Ausführungsbeispiel umfasst das nunmehr geöffnete Pop-up Fenster 63 wiederum eine Vielzahl von lkons 57 mittels derer schließlich Parameter 64 der als Feldhäcksler 49 ausgeführten landwirtschaftlichen Arbeitsmaschine 1, hier die Empfindlichkeit des Metalldetektors, editierbar sind. Es liegt im Rahmen der Erfindung, dass neben den beschriebenen zwei Pop-up Fenstern 53, 63 eine Vielzahl von Pop-up Fenstern übereinander positionierbar sind, wobei die Zahl der Pop-up Fenster von der abzubildenden Editierfunktion abhängen und in einer bevorzugten Ausgestaltung, zwei nicht übersteigen sollte. Das Schließen des jeweiligen Pop-up Fensters 53, 63 wird wiederum durch Aktivierung einer dem jeweiligen Pop-up Fenster 53, 63 zugeordneten Schließen-Leiste 56 oder durch Aktivierung der zuvor beschriebenen Escape-Taste 41 bewirkt. Jedes der Pop-up Fensters 53, 63 kann zudem so beschaffen sein, dass innerhalb des jeweiligen Pop-up Fensters 53, 63 dann mittels vertikalem Scrollen 35 durch die verfügbaren Editieroptionen 62 und Parameter 64 navigiert werden kann, wenn alle verfügbaren Editieroptionen 62 und Parameter 64 nicht sinnvoll in einem einzigen Anzeigebereich darstellbar sind.

In erfindungsgemäßer Weise wird der editierbare Parameter 64 in dem jeweils geöffneten Pop-up Fenster 53, 63 durch ein entsprechendes Ikon 57a-c repräsentiert, wobei es im Rahmen der Erfindung liegt, dass einem Arbeitsorgan der landwirtschaftlichen Arbeitsmaschine 1, hier den Einzugsorganen 58 eines Feldhäckslers 49, eine Vielzahl von Parameter 64 repräsentierende lkons 57 zugeordnet sein können. Zur Änderung des jeweils visualisierten Parameters 64 ist das jeweilige Ikon 57 als im folgenden noch näher zu beschreibendes virtuelles Einstellelement 65 ausgeführt, mittels dessen die Änderung des jeweiligen Parameters 64 schließlich bewirkt werden kann. Im dargestellten Ausführungsbeispiel umfasst das virtuelle Einstellelement 65 einen virtuellen Drehschalter 69, einen virtuellen Schiebeschalter 66 sowie als Plus- und Minus Button 67, 68, ausgeführte Editierbutton wobei dem virtuellen Schiebeschalter 66 und dem virtuellen Drehschalter 69 jeweils ein Marker 70 zur Kennzeichnung des konkreten Wertes des visualisierten Parameters 64 zugeordnet ist.

Durch Betätigung des Markers 70 unmittelbar auf dem als Touchscreen-Monitor 21 ausgeführten Display 18 wird der jeweilige Parameter 64 geändert. Ein erster Änderungsmodi umfasst die Änderung mittels des virtuellen Schiebeschalters 66 bei dem der Marker 70 in vertikaler Richtung linear verschoben wird. Die Positionsänderung des Markers 70 kann aber auch durch unmittelbare Berührung der Plus- und Minus-Button 67, 68 auf dem Touchscreen-Monitor 21 bewirkt werden. Zudem ist es möglich, die Änderung des Parameters 64 mittels virtuellem Drehschalter 69 in der Weise vorzunehmen, dass der Marker 70 durch Berührung des Touchscreen-Monitors 21 kreisförmig in seiner Position geändert wird. Vorzugsweise sind alle Änderungsmodi in das Display 18 integriert, sodass eine Änderung des Parameters 64 mittels des linear verschiebbaren Markers 70 des virtuellen Schiebeschalters 66 vorgenommen wird, während der Marker 70 des virtuellen Drehschalters 69 unmittelbar den tatsächlichen Wert des geänderten Parameters 64 anzeigt. Es liegt zudem im Rahmen der Erfindung, dass nur ein Änderungsmodi auf dem Display 18 verfügbar ist, wobei dann der virtuelle Schiebeschalter 66 die Änderung nicht nur qualitativ, etwa + bedeutet höher und - bedeutet niedriger, sondern auch quantitativ angeben muss. Zudem kann die Aktivierung der dem Display 18 zugeordneten virtuellen Einstellelemente 65 durch Betätigung der zu Figur 2 beschriebenen Bedienelemente 39, vorzugsweise durch Betätigung des dort offenbarten Dreh-Drück-Schalters 40 bewirkt werden.

Eine schnelle Erfassung des Informationsgehaltes des virtuellen Drehschalters 69 ergibt sich dann, wenn der verfügbare Wertebereich 71 des Parameters 64 in dem virtuelle Drehaschalter 69 in einem ringförmigen Bereich 72 visualisiert ist und der Marker 70 in diesem ringförmigen Bereich 72 bewegt wird. Der ringförmige Bereich 72 verfügt über Abschnitte 73a-c unterschiedlicher Färbung, wobei die Färbung des jeweiligen Abschnitts 73a-c ein Maß für die Güte des visualisierten Parameters 64 darstellt, wobei hier eine Rotfärbung für kritische Werte und eine Grünfärbung für optimale Werte gewählt werden kann.

Weiter liegt es im Rahmen der Erfindung, dass die mittels der erfindungsgemäßen Bedien- und Anzeigeeinheit 8 steuerbare landwirtschaftliche Arbeitsmaschine 1 nicht auf eine als Mähdrescher 2 oder Feldhäcksler 49 ausgeführte landwirtschaftliche Arbeitsmaschine 1 beschränkt ist sondern beliebig, etwa als Traktor-Anbaugeräte-Kombination, ausgeführt sein kann. Zudem können die mit der Bedien- und Anzeigeeinheit 8 einstellbaren Parameter 64 von beliebiger Art sein und etwa Maschinenparameter, Qualitätsparameter der landwirtschaftlichen Arbeitsmaschine, Qualitätsparameter des Erntegutes und Erntegutparameter umfassen.

**Bezugszeichenliste:**

| | | | |
|---|---|---|---|
| 1 | landwirtschaftliche Arbeitsmaschine | 31 | Taste "Hotkey" |
| 2 | Mähdrescher | 32 | Visualisierungsbereich "Arbeitsphasen" |
| 3 | Arbeitsaggregat | 33 | Visualisierungsbereich "Tool-Menü" |
| 4 | Schneidwerk | 34 | horizontales Scrollen |
| 5 | Erntegut | 35 | vertikales Scrollen |
| 6 | Förderorgan | 36 | Anzeigefeld |
| 7 | Schrägförderer | 37 | Visualisierungsbereich "Tool-Content" |
| 8 | Bedien- und Anzeigeeinheit | 38 | Visualisierungsbereich "Tool-Submenü" |
| 9 | erste Dreschtrommel | 39 | Bedienelement |
| 10 | zweite Dreschtrommel | 40 | Dreh-Drück-Schalter |
| 11 | Trenneinrichtung | 41 | Escape-Taste |
| 12 | Hordenschüttler | 42 | Vorbereitung |
| 13 | Reinigungseinrichtung | 43 | Straßenfahrt |
| 14 | Gebläse | 44 | Feldfahrt |
| 15 | Reinigungssieb | 45 | Vorgewende |
| 16 | Schwad | 46 | Visualisierungsbereich "Arbeitsphasen-Content" |
| 17 | Kabine | 46a,b | Teilbereich |
| 18 | Display | 47 | Visualisierungsbereich "Tool-View" |
| 19 | erste Navigationsebene | 48 | Berührung |
| 20 | zweite Navigationsebene | 49 | Feldhäcksler |
| 21 | Touchscreen-Monitor | 50 | Werkzeug |
| 22 | erste Bedieneinheit | 51 | Rand |
| 23 | zweite Bedieneinheit | 52 | horizontale Richtung |
| 24 | Bediener | 53 | Pop-up Fenster |
| 25 | Header-Menüleiste | 54, 55 | Editieroption |
| 26 | Anzeigebereich | 56 | Schließen-Leiste |
| 27 | Arbeitsphasen | 57 | Ikon |
| 28 | Anzeigebereich | 57a-c | Ikon |
| 29 | Anzeigebereich "Favoriten" | 58 | Einzugsorgane |
| 30 | Anzeigbereich "Hotkey" | 59 | Häckselaggregat |
| 60 | Nachzerkleinerungseinrichtung | | |
| 61 | Nachbeschleuniger | | |
| 62 | Editieroption | | |
| 63 | Pop-up Fenster | | |
| 64 | Parameter | | |
| 65 | virtuelles Einstellelement | | |
| 66 | virtueller Schiebeschalter | | |
| 67 | Plus-Editierbutton | | |
| 68 | Minus-Editierbutton | | |
| 69 | virtueller Drehschalter | | |
| 70 | Marker | | |
| 71 | verfügbarer Wertebereich | | |
| 72 | ringförmiger Bereich | | |
| 73a-c | Abschnitte | | |

## Patentansprüche

1. Elektronische Bedien- und Anzeigeeinheit mit zumindest einem Display und wenigstens einer Bedieneinheit, wobei das Display eine Vielzahl von Visualisierungsbereichen umfasst und einem oder mehreren der Visualisierungsbereiche die Einstellung von Parametern repräsentierende Ikons zugeordnet sind
**dadurch gekennzeichnet,**
**dass** das jeweilige Ikon (57) einen Parameter (64) einer Arbeitsmaschine (1) repräsentiert und durch Aktivierung des lkons (57) zumindest ein virtuelles Einstellelement (65) am Display (18) angezeigt wird, wobei das virtuelle Einstellelement (65) zur Änderung des Parameters (64) der Arbeitsmaschine (1) editierbar ist.

2. Elektronische Bedien- und Anzeigeeinheit nach Anspruch 1,
**dadurch gekennzeichnet,**
**dass** das virtuelle Einstellelement (65) als virtueller Drehschalter (69) und/oder virtueller Schiebeschalter (66) ausgeführt ist.

3. Elektronische Bedien- und Anzeigeeinheit nach Anspruch 2,
**dadurch gekennzeichnet,**
**dass** die Editierbarkeit des virtuellen Drehschalters (69) durch kreisförmiges Ziehen eines Markers (70) und die Editierbarkeit des virtuellen Schiebeschalters (66) durch lineares Ziehen eines Markers (70) bewirkt wird und die Aktivierung des jeweiligen Markes (70) mittels der Touchscreen-Funktion eines als Touchscreen-Monitor (21) ausgeführten Displays (18) oder durch dem Display (18) zugeordnete Bedienelemente (39), vorzugsweise Dreh-Drück-Schalter (40) erfolgt.

4. Elektronische Bedien- und Anzeigeeinheit nach Anspruch 3,
**dadurch gekennzeichnet,**
**dass** dem virtuellen Schiebeschalter (66) oder dem virtuellen Drehschalter (69) Editierbutton (67, 68) auf dem Display (18) zur Editierung des jeweiligen Parameters zugeordnet sind, wobei deren Editierung durch Berührung der Editierbutton (67, 68) auf einem als Touchscreen-Monitor (21) ausgeführten Display (18) oder durch dem Display (18) zugeordnete Bedienelemente (39), vorzugsweise Dreh-Drück-Schalter (40) erfolgt.

5. Elektronische Bedien- und Anzeigeeinheit nach einem der Ansprüche 2 bis 4, **dadurch gekennzeichnet,**
**dass** einem oder mehreren der Visualisierungsbereiche (32, 33, 37, 38, 46, 47) des Displays (18) ein denselben Parameter (64) visualisierender virtueller Schiebeschalter (65, 66), ein virtueller Drehschalter (65, 69) und Editierbutton (65, 67, 68) zugeordnet sind, wobei der Parameter (64) durch Aktivierung eines dieser virtuellen Einstellelemente (65) änderbar ist und die Änderung zumindest eines Einstellelementes (65) zugleich eine Änderung der weiteren Einstellelemente (65) bewirkt.

6. Elektronische Bedien- und Anzeigeeinheit nach einem der vorhergehenden Ansprüche,
**dadurch gekennzeichnet,**
**dass** die Arbeitsmaschine als landwirtschaftliche Arbeitsmaschine (1) ausgeführt ist und die editierbaren Parameter (64) Maschinenparameter, Qualitätsparameter der landwirtschaftlichen Arbeitsmaschine (1), Qualitätspaarmeter des Erntegutes und Erntegutparameter umfassen können.

7. Elektronische Bedien- und Anzeigeeinheit nach einem der vorhergehenden Ansprüche,
**dadurch gekennzeichnet,**
**dass** der verfügbare Wertebereich (71) des Parameters (64) in dem virtuellen Drehschalter (69) in einem ringförmigen Bereich (72) visualisiert ist und der Marker (70) in diesem ringförmigen Bereich (72) bewegt wird.

8. Elektronische Bedien- und Anzeigeeinheit nach Anspruch 7,
**dadurch gekennzeichnet,**
**dass** der ringförmige Bereich (72) Abschnitte (73a-c) unterschiedlicher Färbung umfasst und die Färbung des jeweiligen Abschnitts (73a-c) ein Maß für die Güte des visualisierten Parameters (64) ist.

9. Elektronische Bedien- und Anzeigeeinheit nach einem der vorhergehenden Ansprüche,
**dadurch gekennzeichnet,**
**dass** einem oder mehreren der Visualisierungsbereiche (32, 33, 37, 38, 46, 47) des Displays Pop-up Fenster (53) zugeordnet sind und jedes Pop-up Fenster (53) ein oder mehrere jeweils einen Parameter (64) repräsentierende lkons (57) umfasst, wobei ein oder mehrere der lkons (57) mittels der Editierelemente (65) änderbar sind.

10. Elektronische Bedien- und Anzeigeeinheit nach Anspruch 9,
**dadurch gekennzeichnet,**
**dass** eine Vielzahl weiterer Pop-up Fenster (63) aktivierbar sind, wobei jedes der nachfolgend aktivierten Pop-up Fenster (63) über dem zuvor aktivierten Pop-up Fenster (63) durch horizontales Einschieben (52) in den Visualisierungsbereich des Displays (18) positioniert wird.

11. Elektronische Bedien- und Anzeigeeinheit nach einem der vorhergehenden Ansprüche,
**dadurch gekennzeichnet,**
**dass** das Display (18) in Navigationsebenen (19, 20) betreibbar ist, wobei das Display (18) innerhalb einer Navigationsebene (19, 20) in Visualisierungsbereiche (32, 33, 37, 38, 46, 47) unterteilt ist und zumindest ein Teil der Visualisierungsbereiche (32, 33, 37, 38, 46, 47) relativ zueinander bewegbar sind und die Bewegbarkeit der Visualisierungsbereiche (32, 33, 37, 38, 46, 47) relativ zueinander ein horizontales und/oder vertikales Scrollen (34 ,35) des jeweiligen Visualisierungsbereiches (32, 33, 37, 38, 46, 47) umfasst.
